# DEMANDE DE BREVET EUROPEEN

(11) **EP 3 731 398 A1**
(43) Date de publication de la demande: **28.10.2020**
(21) Numéro de dépôt: 20170412.9
(22) Date de dépôt: 20.04.2020
(51) Int. Cl.: H02M 7/48, H02J 3/38, H02M 1/00, H02M 7/483

(54) **PROCÉDÉ DE COMMANDE D'UN CONVERTISSEUR DC/AC**

(30) Priorité: 25.04.2019 FR 1904362
(71) Demandeur: Schneider Electric Industries SAS, 92500 Rueil Malmaison (FR)
(72) Inventeur: SCHURCH, Thomas, 38050 GRENOBLE Cedex 09 (FR); RAHMANI, Mustapha, 38050 GRENOBLE Cedex 09 (FR)
(74) Mandataire: Brevalex

(57) **Abrégé**

L'invention concerne un procédé de commande d'un convertisseur (100) DC/AC connecté à un réseau (110) électrique, le convertisseur (100) étant commandé par une loi de commande (200) configurée pour imposer au convertisseur (100) qu'il fonctionne, par défaut, en mode source de courant, et en cas de disparition du réseau (110) électrique, commande le basculement, dudit convertisseur (100), du mode source de courant vers un mode générateur synchrone virtuel, la loi de commande (200) étant également configurée pour, tant que le convertisseur (100) fonctionne en mode source de courant, surveiller la fréquence et la phase du réseau (110) électrique permettant d'initialiser l'émulation du mode générateur synchrone virtuel, par ladite loi de commande (200), au moment d'une détection de la disparition du réseau (110) électrique.

## Description

### DOMAINE TECHNIQUE

La présente invention concerne un procédé de commande d'un convertisseur DC/AC. En particulier, la présente invention concerne un procédé de commande d'un convertisseur permettant de faire basculer ce dernier d'un mode source de courant vers un mode conforme à celui d'un générateur synchrone virtuel.

### ÉTAT DE LA TECHNIQUE ANTÉRIEURE

Les convertisseurs DC/AC sont aujourd'hui largement utilisés dans les réseaux de distribution électrique. Leur mise en œuvre est notamment imposée par l'émergence des sources d'énergie non conventionnelles telles que les sources d'énergie renouvelable, mais également par la mise en œuvre de réserves primaires telles que les batteries ou encore les volants d'inertie (« Fly Wheel » selon la terminologie Anglo-Saxonne).

Ces convertisseurs peuvent fonctionner en mode source de courant (« Grid-tie » selon la terminologie Anglo-Saxonne).

Plus particulièrement, selon ce mode de fonctionnement, dès lors qu'un convertisseur est connecté à un réseau de distribution électrique, il se synchronise au réseau de distribution électrique via une boucle à verrouillage de phase (« PLL » ou « Phase Lock Loop » selon la terminologie Anglo-Saxonne), et lui fournit une puissance active P et une puissance réactive Q régulées via une boucle de contrôle de puissance (« Power Control Loop » selon la terminologie Anglo-Saxonne) et sur la base de la tension V et de la fréquence F du réseau de distribution électrique.

Un convertisseur fonctionnant en tant que source de courant est simple à mettre en œuvre, et procure une relative stabilité au réseau de distribution électrique.

Toutefois, selon ce mode de fonctionnement, il n'est pas possible de recourir à un îlotage (« Islanding » selon la terminologie Anglo-Saxonne), ou de répondre à une insuffisance du réseau et notamment une disparition de ce dernier.

Afin de pallier ces inconvénients, un autre mode de contrôle du convertisseur, dit « mode source de tension » (« Grid Forming » selon la terminologie Anglo-Saxonne), peut également être mis en œuvre.

Aussi parmi les convertisseurs fonctionnant selon ce mode, les générateurs synchrones virtuels (tel que celui décrit dans le document [1] cité à la fin de la description) occupent une place de choix.

En effet, ces derniers peuvent facilement être connectés en parallèle avec d'autres sources d'énergie telles que des groupes électrogènes, afin de se répartir les charges connectées au réseau de distribution électrique.

Toutefois, contrairement au mode source de courant, le mode générateur synchrone virtuel représente un certain danger pour les opérateurs, et nécessite de prendre des précautions particulières lors des opérations de maintenance.

Ainsi, un convertisseur fonctionnant par défaut en mode source de courant, et capable de basculer vers un mode conforme à celui d'un générateur synchrone virtuel, semble être une option particulièrement intéressante afin d'assurer la stabilité du réseau tout en minimisant les risques pour les opérateurs susceptibles d'intervenir sur le convertisseur lors d'opérations de maintenance.

Ce basculement du mode source de courant vers le mode générateur synchrone peut notamment intervenir à la suite d'une déconnexion volontaire (par un ilotage programmé) ou involontaire d'un réseau de distribution dit « fort » (« Infinité bus » selon la terminologie Anglo-Saxonne).

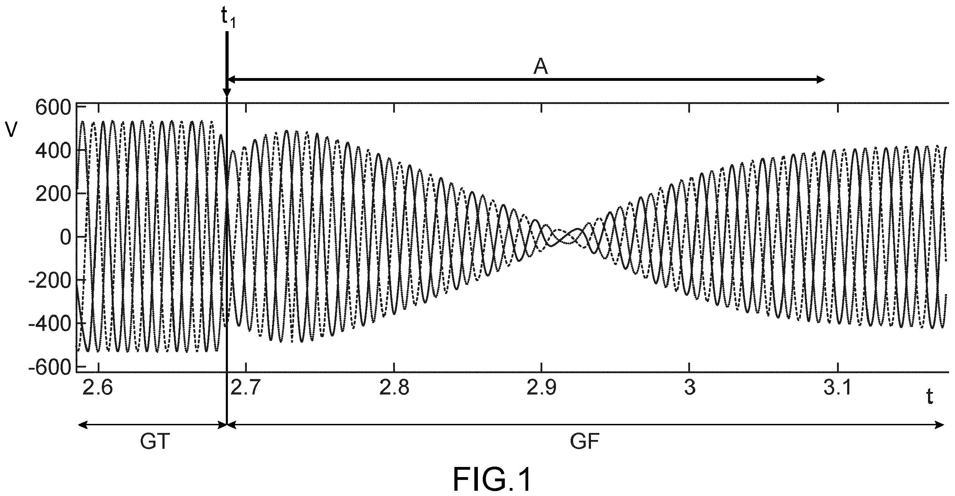

Toutefois, le basculement entre ces deux modes, notamment lorsque le réseau disparait, reste problématique, et peut générer une instabilité de la tension et de la fréquence en sortie du convertisseur tel qu'illustré à la figure 1.

Un but de la présente invention est donc de proposer un procédé de contrôle d'un convertisseur permettant d'éliminer les instabilités de tension et de fréquence susceptibles d'intervenir lors du basculement dudit convertisseur d'un mode source de courant vers un mode générateur synchrone virtuel.

Un autre but de la présente invention est de proposer un procédé de contrôle d'un convertisseur permettant de garantir la sécurité des personnes opérant sur ledit convertisseur.

### EXPOSÉ DE L'INVENTION

Les buts de l'invention sont, au moins en partie, atteints par un procédé de commande d'un convertisseur DC/AC connecté à un réseau électrique, le convertisseur étant commandé par une loi de commande configurée pour imposer au convertisseur qu'il fonctionne, par défaut, en mode source de courant, et en cas de disparition du réseau électrique, commande le basculement, dudit convertisseur, du mode source de courant vers un mode générateur synchrone virtuel, la loi de commande étant également configurée pour, tant que le convertisseur fonctionne en mode source de courant, surveiller la fréquence et la phase du réseau électrique permettant d'initialiser l'émulation du mode générateur synchrone virtuel, par ladite loi de commande, au moment d'une détection de la disparition du réseau électrique.

Selon un mode de mise en œuvre, la loi de commande comprend deux routines dites, respectivement, routine source de courant et routine générateur synchrone mettant en œuvre, respectivement la commande en mode source de courant et la commande en mode générateur synchrone virtuel du convertisseur.

Selon un mode de mise en œuvre, la routine source de courant comprend boucle à verrouillage de phase qui, à partir de la fréquence et de l'angle du réseau calcul, permet de synchroniser, en termes de phase et d'angle de phase, le courant délivré par le convertisseur au réseau électrique.

Selon un mode de mise en œuvre, la routine source de courant comprend également une boucle de contrôle de puissance destinée à estimer un courant de référence que le convertisseur doit délivrer en fonction d'une puissance active P et une puissance réactive Q nécessaires au fonctionnement du réseau électrique.

Selon un mode de mise en œuvre, la routine générateur synchrone calcule en permanence un courant de référence, une tension de référence compatibles avec le fonctionnement d'un générateur synchrone configuré pour former le réseau.

Notamment le courant de référence est un courant qu'un générateur synchrone fournirait s'il était soumis à la tension mesurée au niveau des bornes de sortie dudit convertisseur.

Selon un mode de mise en œuvre, la fréquence et la phase du réseau surveillées par la loi de commande sont mise en œuvre pour synchroniser la tension de référence et le courant de référence calculés par la routine générateur synchrone.

Selon un mode de mise en œuvre, la loi de commande comprend en outre un module de gestion de basculement qui, par défaut, impose une commande du convertisseur par la routine source de courant, et dès qu'une disparition du réseau intervient, impose une commande du convertisseur par la routine générateur synchrone.

L'invention concerne également un programme d'ordinateur comprenant des instructions qui, lorsque le programme est exécuté par un ordinateur, conduisent à mettre en œuvre le procédé de commande selon la présente invention.

L'invention concerne également un convertisseur de courant continu en courant alternatif pourvu du programme d'ordinateur selon la présente invention.

### BRÈVE DESCRIPTION DES DESSINS

D'autres caractéristiques et avantages apparaîtrons dans la description qui va suivre des modes de mise en œuvre du procédé de commande d'un convertisseur DC/AC selon l'invention, donnés à titre d'exemples non limitatifs, en référence aux dessins annexés dans lesquels :
- la figure 1 est une représentation graphique de la tension V (axe vertical, en « Volt ») en fonction du temps t (axe horizontal, en « s »), notamment, la figure 1 représente l'effet du basculement au temps t₁ d'un mode source de courant (zone « GT ») vers un mode générateur synchrone virtuel (zone « GF ») d'un convertisseur selon un procédé de commande connu de l'état de la technique, la zone A délimite une période temporelle associée à une instabilité de la tension ;
- la figure 2 est une représentation en modules fonctionnels d'un convertisseur selon la présente invention ;
- les figures 3a et 3b illustrent l'évolution, respectivement, de la tension V_{abc} (axe vertical) et de l'intensité du courant (axe vertical) en fonction du temps à la suite d'une perte de réseau à un instant t₁.

### EXPOSÉ DÉTAILLÉ DE MODES DE RÉALISATION PARTICULIERS

L'invention concerne un procédé de commande d'un convertisseur DC/AC (ci-après « convertisseur »). Plus particulièrement, l'invention concerne un procédé de commande d'un convertisseur permettant de faire basculer ce dernier d'un mode source de courant vers un mode conforme à celui d'un générateur synchrone virtuel.

Selon la présente invention, le convertisseur peut être un convertisseur de courant continu en courant alternatif ou un convertisseur de tension continue en tension alternative. La suite de la description sera toutefois limitée la mise en œuvre d'un convertisseur de tension.

Le procédé de commande est exécuté par une loi de commande qui impose, par défaut, au convertisseur de fonctionner en mode source de courant, et en cas de disparition du réseau électrique, notamment un réseau électrique fort, commande le basculement du mode source courant vers le mode générateur synchrone virtuel.

La loi de commande est par ailleurs configurée pour surveiller en permanence la fréquence et la phase du réseau, et émuler, à partir de ces données le mode générateur synchrone virtuel. Cette émulation, exécutée en tâche de fond lorsque le convertisseur fonctionne en mode source de courant, permet de basculer, sans interruption de puissance pour la ou les charge électriques du mode source de courant vers le mode générateur synchrone virtuel dès lors qu'une défaillance du réseau ou qu'un îlotage de ce dernier survient.

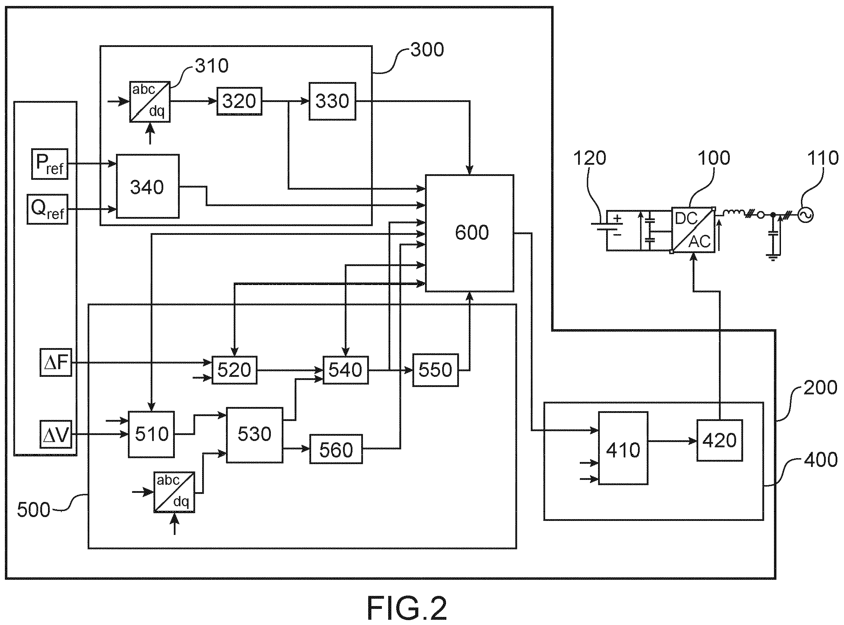

La figure 2 est une représentation schématique des différents blocs d'une loi de commande 200 susceptible d'être mise en œuvre pour la commande d'un convertisseur 100 selon la présente invention.

Le convertisseur 100 est connecté à un réseau de distribution électrique 110 soumis à une tension V de fréquence « f » et d'angle de phase « α » (ci-après « la phase α »), imposés par une ou plusieurs source(s) de tension susceptibles de former le réseau.

Le convertisseur 100 convertit la tension continue générée par une source d'énergie 120 en une tension alternative.

La source d'énergie 120 peut comprendre une source de tension continue. Une source de tension continue peut comprendre, par exemple, des panneaux photovoltaïques, des éoliennes, des hydroliennes, des machines thermodynamiques, des batteries ou encore des volants d'inertie.

Le convertisseur 100 peut comprendre, dans le cas d'un onduleur à trois niveaux, deux condensateurs C⁺ et C⁻ connectés entre eux en série pour former un condensateur équivalent C. Les bornes du condensateur équivalent C sont électriquement connectées, par exemple en parallèle aux bornes de la source d'énergie 120.

La mise en œuvre des deux condensateurs C⁺ et C⁻ permet de garantir une forme sinusoïdale non déformée du courant fourni par le convertisseur 100 au réseau de distribution électrique. L'invention n'est cependant pas limitée à l'utilisation d'un onduleur à trois niveaux.

Le fonctionnement du convertisseur 100 est régit par une loi de commande 200.

La loi de commande 200 impose notamment au convertisseur qu'il fonctionne par défaut en mode source de courant (« Grid Tie » selon la terminologie Anglo-Saxonne).

En d'autres termes, selon ce mode de fonctionnement, le convertisseur 100 est soumis à la fréquence f et l'angle de phase α imposés par le réseau 110.

Par «fréquence f et angle de phase α du réseau », on entend la fréquence et la phase de la tension du réseau de distribution électrique 110.

La loi de commande 200 peut, à cet égard, comprendre une routine dédiée à ce mode de fonctionnement, dite routine source de courant 300.

La routine source de courant 300 peut en particulier comprendre un module de Park 310, un module PLL 320 (PLL pour boucle à verrouillage de phase), un module de calcul de phase du réseau 330 et un module PCL 340 (PCL pour boucle de contrôle de puissance).

Le module de Park 310 est notamment dédié au suivi de la tension V_{abc} du réseau, et dont la fréquence f et la phase α sont extraites, respectivement, par le module PLL 320 et le module de calcul 330.

Notamment, le module de Park 310 a pour fonction de transformer les tensions, par exemple les trois tensions alternatives V_{abc} du réseau 110, en deux tensions continues V_{dq} qui sont utilisées par les modules 320 et 330 pour estimer respectivement la fréquence et la phase du réseau 110.

Le module PCL calcule un courant de référence I_{ref,GT} associé à une puissance active P_{ref} et une puissance réactive Q_{ref} que le convertisseur 100 doit délivrer au réseau de distribution électrique 110.

La loi de commande 200 comprend également une routine de régulation de courant 400 pourvue d'un module de régulation de courant 410 et d'un module de génération d'impulsion 420 (« PWM » ou « Pulsation Width Modulation) selon la terminologie Anglo-Saxonne)

Notamment, le module de génération d'impulsion 420 impose au convertisseur 100 d'appliquer des rapports cycliques, calculés par le module de régulation de courant 410, et permettant audit convertisseur de délivrer au réseau de distribution électrique le courant I_{ref,GT} à la fréquence f et à la phase α du réseau 110.

La loi de commande 200 est également adaptée pour imposer un basculement du mode source de courant vers un mode générateur synchrone virtuel en cas de disparition du réseau.

La « disparition du réseau » peut par exemple survenir à la suite d'une défaillance du ce denier ou d'un ilotage, par exemple un ilotage programmé.

Selon la présente invention et tel que décrit dans le document [1] cité à la fin de la description, le mode générateur synchrone est un mode pour lequel le convertisseur se comporte comme un groupe électrogène.

À cet égard, la loi de commande 200 peut comprendre une routine dédiée à ce mode de fonctionnement, dite routine générateur synchrone 500.

Un groupe électrogène comprend généralement un rotor entraîné en rotation dans un stator et un régulateur de tension automatique (« AVR » ou « Automatic Voltage Regulator » selon la terminologie Anglo-Saxonne) agissant sur les enroulements rotoriques du rotor. Le régulateur de tension automatique applique, ainsi, une tension sur les enroulements rotoriques en fonction de la tension efficace Vᵣₘₛ (de la tension V) délivrés par le stator (par le groupe électrogène) sur le réseau. Le contrôle par statisme tension/puissance réactive Q permet au groupe électrogène d'adapter la tension efficace Vᵣₘₛ qu'il délivre en fonction de la puissance électrique réactive Q qu'il fournit.

Par ailleurs, le rotor d'un groupe électrogène est généralement entraîné en rotation, par un arbre d'un moteur thermique (par exemple un moteur diesel), à l'intérieur d'un stator. De par sa conception, le groupe électrogène est capable de former le réseau. Autrement dit, le groupe électrogène peut imposer la tension V et la fréquence f à un réseau électrique.

Selon la présente invention, la routine générateur synchrone 500 comprend des modules 540 et 550, décrits plus en détails dans la suite de la description, qui génèrent, respectivement, en permanence la fréquence f et la phase α du réseau. Plus particulièrement, les modules 540 et 550 sont en permanence initialisés à la fréquence et la tension du réseau en coopération avec un module de gestion de basculement 600. Cette initialisation des modules 540 et 550 permet par ailleurs de calculer un courant de référence I_{ref,GF}, qu'un groupe électrogène capable de former le réseau délivrerait.

Ces paramètres ne sont toutefois communiqués à la routine de régulation de courant 400 tant que le convertisseur 100 fonctionne en mode source de courant. En d'autres termes, les modules 540 et 550 de la routine générateur synchrone 500 tournent en tâche de fond tant qu'aucune défaillance du réseau n'est détectée ou qu'aucun ordre d'îlotage n'est émis. En particulier, ces modules 540 et 550 sont constamment initialisés à la fréquence et à l'angle du réseau.

Ainsi, dès qu'une défaillance du réseau de distribution électrique 110, survient, la routine générateur synchrone 500 prend le relais sur la routine source de courant 300 de manière quasi-instantanée et impose au convertisseur 100 un comportement de générateur synchrone de sorte que ce dernier soit en mesure de former le réseau.

En d'autres termes, dès lors que le convertisseur est connecté au réseau, et quel que soit le mode de fonctionnement du convertisseur, la routine générateur synchrone 500 calcule en permanence le courant I_{ref,GF}.

Ce basculement du mode source de courant vers le mode générateur synchrone peut être commandé par un module de gestion de basculement 600 qui impose par défaut la commande du convertisseur par la routine source de courant et, en cas de défaillance du réseau, impose la commande du convertisseur par la routine générateur synchrone.

Le module de gestion de basculement 600 permet ainsi d'initialiser en permanence et correctement les états internes de la commande par la routine générateur synchrone 500 de sorte que ce dernier soit « prêt » au moment du basculement du mode source de courant vers le mode générateur synchrone virtuel. Ainsi selon la présente invention, il est possible de limiter les effets transitoires sur le courant et la tension lors du basculement.

La routine générateur synchrone 500 peut, conformément au générateur synchrone virtuel décrit dans le document [1] cité à la fin de la description, comprendre un module AVR 510 (AVR pour régulateur de tension automatique), un module governor 520, un module machine synchrone 530, le module équations mécaniques 540 et le module de calcul d'angle interne de la machine synchrone 550, un module de limitation de courant 560.

Le module AVR 510 est notamment destiné à réguler la tension aux bornes de sortie du convertisseur 100.

Le module governor 520 est destiné à réguler la fréquence du courant susceptible d'être délivré par le convertisseur.

Le module machine synchrone 530 comprend l'ensemble des équations différentielles relatives au fonctionnement électrique d'une machine synchrone qui est un composant d'un groupe électrogène.

Le module équation mécanique 540 comprend les équations mécaniques d'un arbre tournant.

Le procédé selon la présente invention permet donc de limiter les effets transitoires dus au basculement du mode source de courant vers le mode générateur synchrone virtuel.

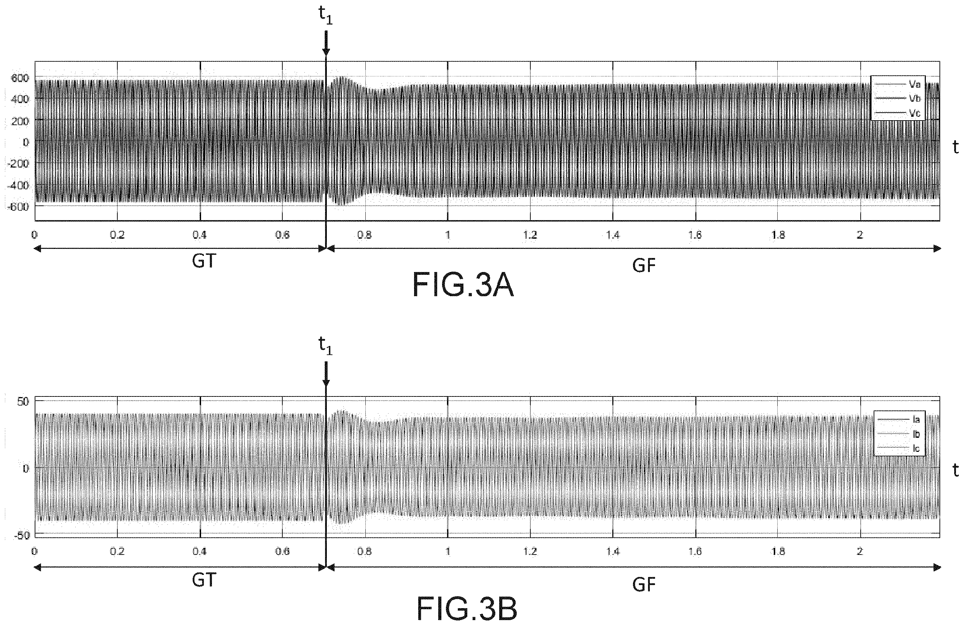

À titre d'illustration, les figures 3a et 3b représentent une simulation du procédé selon la présente invention.

En particulier, les figures 3a et 3b représentent l'évolution, respectivement, de la tension V_{abc} (axe vertical) et de l'intensité du courant (axe vertical) en fonction du temps à la suite d'une perte de réseau à un instant t₁.

Sur ces figures, avant l'instant t₁, le convertisseur est commandé par la routine source de courant. À la suite d'une perte de réseau à l'instant t₁, un basculement de la commande du convertisseur de la routine source de courant vers la routine générateur synchrone s'opère.

Ce basculement s'effectue, contrairement au basculement observé à la figure 1, sans instabilité majeur.

L'invention concerne également un programme d'ordinateur comprenant des instructions qui, lorsque le programme est exécuté par un ordinateur, conduisent à mettre en œuvre le procédé de commande selon la présente invention.

L'invention concerne également un convertisseur DC/AC pourvu du programme d'ordinateur selon la présente invention.

### REFERENCES

[1] EP 3208907

## Revendications

1. Procédé de commande d'un convertisseur (100) DC/AC connecté à un réseau (110) électrique, le convertisseur (100) étant commandé par une loi de commande (200) configurée pour imposer au convertisseur (100) qu'il fonctionne, par défaut, en mode source de courant, et en cas de disparition du réseau (110) électrique, commande le basculement, dudit convertisseur (100), du mode source de courant vers un mode générateur synchrone virtuel, la loi de commande (200) étant également configurée pour, tant que le convertisseur (100) fonctionne en mode source de courant, surveiller la fréquence et la phase du réseau (110) électrique permettant d'initialiser l'émulation du mode générateur synchrone virtuel, par ladite loi de commande (200), au moment d'une détection de la disparition du réseau (110) électrique.

2. Procédé selon la revendication 1, dans lequel la loi de commande (200) comprend deux routines dites, respectivement, routine source de courant (300) et routine générateur synchrone (500) mettant en œuvre, respectivement, la commande en mode source de courant et la commande en mode générateur synchrone virtuel du convertisseur (100).

3. Procédé selon la revendication 2, dans lequel la routine source de courant (300) comprend une boucle à verrouillage de phase (320) configurée pour estimer la fréquence, et permettre à un module de calcul de phase (330) de calculer la phase du réseau.

4. Procédé selon la revendication 3, dans lequel la routine source de courant (300) comprend également une boucle de contrôle de puissance (340) destinée à estimer un courant de référence que le convertisseur (100) doit délivrer en fonction d'une puissance active P et une puissance réactive Q nécessaires au fonctionnement du réseau (110) électrique.

5. Procédé selon l'une des revendications 2 à 4, dans lequel la routine générateur synchrone calcule en permanence un courant de référence, une tension de référence compatibles avec le fonctionnement d'un générateur synchrone configuré pour former le réseau.

6. Procédé selon la revendication 5, dans lequel la fréquence et la phase du réseau (110) surveillées par la loi de commande (200) sont mises en œuvre pour synchroniser la tension de référence et le courant de référence calculés par la routine générateur synchrone (500).

7. Procédé selon la revendication 6, dans lequel la tension de référence et le courant de référence sont également calculés par la routine générateur synchrone (500) lorsque le convertisseur (100) fonctionne en mode générateur de courant.

8. Procédé selon l'une des revendications 2 à 7, dans lequel la loi de commande (200) comprend en outre un module de gestion de basculement (600) qui, par défaut, impose une commande du convertisseur (100) par la routine source de courant (300), et dès qu'une disparition du réseau intervient, impose une commande du convertisseur (100) par la routine générateur synchrone (500).

9. Programme d'ordinateur comprenant des instructions qui, lorsque le programme est exécuté par un ordinateur, conduisent à mettre en œuvre le procédé selon l'une des revendications 1 à 8.

10. Convertisseur (100) DC/AC pourvu du programme d'ordinateur selon la revendication 9.
